(19) Europäisches Patentamt
European Patent Office
Office européen des brevets

(11) **EP 4 089 369 A1**

(12) **EUROPEAN PATENT APPLICATION**
published in accordance with Art. 153(4) EPC

(43) Date of publication:
**16.11.2022 Bulletin 2022/46**

(51) International Patent Classification (IPC):
***G01C 21/34*** *(2006.01)*

(21) Application number: **20914201.7**

(86) International application number:
**PCT/CN2020/072850**

(22) Date of filing: **17.01.2020**

(87) International publication number:
**WO 2021/142799 (22.07.2021 Gazette 2021/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **LIU, Yalin
Shenzhen, Guangdong 518129 (CN)**
• **CAO, Haotian
Changsha, Hunan 410082 (CN)**
• **SONG, Xiaolin
Changsha, Hunan 410082 (CN)**

(74) Representative: **Körber, Martin Hans
Mitscherlich PartmbB
Patent- und Rechtsanwälte
Sonnenstraße 33
80331 München (DE)**

(54) **PATH SELECTION METHOD AND PATH SELECTION DEVICE**

(57) This application provides a path selection method, to determine an optimal obstacle avoidance path from a plurality of candidate paths, so that path selection efficiency can be improved. The method includes: obtaining basic road information of a target road area, location information of an obstacle in the target road area, and a plurality of candidate paths for a target object in the target road area; determining an obstacle risk relationship of the target road area based on the basic road information and the location information of the obstacle, where the obstacle risk relationship is used to obtain an obstacle risk of any location in the target road area; determining a comprehensive obstacle risk of each candidate path based on the obstacle risk relationship and location distribution of each of the plurality of candidate paths in the target road area; and determining a target path from the plurality of candidate paths based on the comprehensive obstacle risk of each candidate path.

EP 4 089 369 A1

```
┌─────────────────────────────────────────────────────────┐
│  Construct a road risk relationship based on road information │──── 301
└─────────────────────────────────────────────────────────┘
                          │
                          ▼
┌─────────────────────────────────────────────────────────┐
│ Determine a comprehensive road risk of a candidate path based on a road risk │──── 302
│                         field                              │
└─────────────────────────────────────────────────────────┘
                          │
                          ▼
┌─────────────────────────────────────────────────────────┐
│ Construct an obstacle risk relationship based on an obstacle location │──── 303
└─────────────────────────────────────────────────────────┘
                          │
                          ▼
┌─────────────────────────────────────────────────────────┐
│ Determine a comprehensive obstacle risk of the candidate path based on an │──── 304
│                    obstacle risk field                     │
└─────────────────────────────────────────────────────────┘
                          │
                          ▼
┌─────────────────────────────────────────────────────────┐
│         Determine path quality of the candidate path         │──── 305
└─────────────────────────────────────────────────────────┘
                          │
                          ▼
┌─────────────────────────────────────────────────────────┐
│ Determine a target path based on the comprehensive road risk, the │──── 306
│ comprehensive obstacle risk, and the path quality that are of the candidate path │
└─────────────────────────────────────────────────────────┘
```

FIG. 3

## Description

### TECHNICAL FIELD

This application relates to the field of unmanned driving technologies, and in particular, to a path selection method and a path selection apparatus.

### BACKGROUND

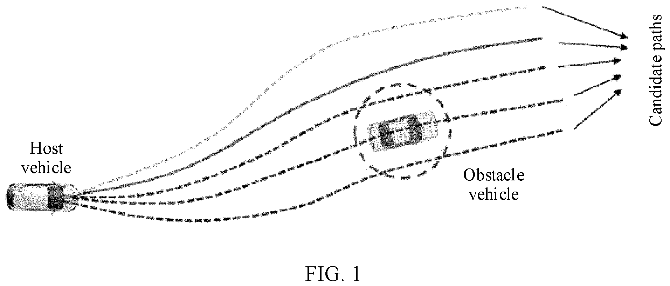

Unmanned driving is an important part of an intelligent transportation system. After receiving various perception information from sensors, an unmanned vehicle (a UV for short) analyzes a current environment, and then delivers instructions to a bottom-layer control module. This process is a main task of a decision-making and planning module. Typical decision-making and planning of the unmanned vehicle includes global path planning, behavior decision-making, and path planning. During path planning, a plurality of candidate paths are usually generated on a road surface by using a programming algorithm, and then an optimal obstacle avoidance path is selected based on geometric properties of the candidate paths and a location of an obstacle. Refer to a schematic diagram of path selection shown in FIG. 1.

According to an existing obstacle avoidance path selection mechanism, an inequality is constructed to determine whether there is an obstacle on a candidate path, and collision detection is performed on the candidate paths one by one. If there is an obstacle on the path, the path is discarded.

Because the candidate paths need to be checked one by one to determine whether they collide with the obstacle, when a road environment is complex and there are a large amount of obstacle data, complexity of an inequality constraint when performing collision detection is high, and path selection efficiency is low.

### SUMMARY

Embodiments of this application provide a path selection method, to determine an optimal obstacle avoidance path from a plurality of candidate paths, so that path selection efficiency can be improved.

According to a first aspect, an embodiment of this application provides a path selection method, including: obtaining basic road information of a target road area, location information of an obstacle in the target road area, and a plurality of candidate paths for a target object in the target road area; determining an obstacle risk relationship of the target road area based on the basic road information and the location information of the obstacle, where the obstacle risk relationship is used to obtain an obstacle risk of any location in the target road area; determining a comprehensive obstacle risk of each candidate path based on the obstacle risk relationship and location distribution of each of the plurality of candidate paths in the target road area; and determining a target path from the plurality of candidate paths based on the comprehensive obstacle risk of each candidate path. The plurality of candidate paths are determined based on a location of the target object in the target road area.

According to the path selection method provided in this embodiment of this application, the obstacle risk relationship of the target road area can be constructed based on the basic road information and the location information of the obstacle. In this way, comprehensive obstacle risks of the plurality of candidate paths can be determined, so that a target path with a relatively low obstacle risk is directly obtained from the plurality of candidate paths. Therefore, path selection efficiency can be improved.

In a possible implementation of the first aspect, the plurality of candidate paths include a first candidate path. The determining a comprehensive obstacle risk of each candidate path based on the obstacle risk relationship and location distribution of each of the plurality of candidate paths in the target road area includes: determining a plurality of path points on the first candidate path; determining obstacle risks of the plurality of path points based on the obstacle risk relationship; and determining a comprehensive obstacle risk of the first candidate path based on the obstacle risks of the plurality of path points.

According to the path selection method provided in this embodiment of this application, a plurality of path points can be sampled on a candidate path, and a comprehensive obstacle risk of the entire candidate path can be determined based on obstacle risks of the plurality of path points. This can reduce a calculation amount and improve a path selection speed.

In a possible implementation of the first aspect, an obstacle risk of the first path point is determined based on a horizontal obstacle risk relationship of the first path point and a vertical obstacle risk relationship of the first path point. The horizontal obstacle risk relationship of the first path point is determined based on the location information of the obstacle and a horizontal obstacle risk amplification coefficient. The vertical obstacle risk relationship of the first path point is determined based on the location information of the obstacle and a vertical obstacle risk amplification coefficient.

Optionally, the horizontal obstacle risk amplification coefficient and the vertical obstacle risk amplification coefficient are preset parameters, and are used to respectively represent impact of risks of a horizontal obstacle and a vertical obstacle on each point on a road.

Optionally, a horizontal obstacle risk of the first path point is positively correlated to the horizontal obstacle risk amplification coefficient, and is negatively correlated to a distance between the first path point and the obstacle in a horizontal road direction perpendicular to a road reference line. A vertical obstacle risk of the first path point is determined based on the basic road information, the obstacle location, and a preset vertical obstacle risk amplification coefficient. The vertical obstacle risk of the first path point is positively correlated to the vertical obstacle risk amplification coefficient, and is negatively correlated to a distance between the first path point and the obstacle in a vertical road direction along the road reference line. The horizontal obstacle risk amplification coefficient is less than the vertical obstacle risk amplification coefficient. The obstacle risk of the first path point is determined based on the horizontal obstacle risk of the first path point and the vertical obstacle risk of the first path point.

According to the path selection method provided in this embodiment of this application, when the obstacle risk relationship is constructed, the horizontal obstacle risk amplification coefficient and the vertical obstacle risk amplification coefficient are set based on different degrees of threat caused by the obstacle to a target in the horizontal road direction and the vertical road direction. The vertical obstacle risk amplification coefficient is greater than the horizontal obstacle risk amplification coefficient. Therefore, a determined obstacle risk corresponding to each location in the obstacle risk relationship can be closer to an actual scenario.

In a possible implementation of the first aspect, the method further includes: obtaining a course angle of the obstacle. The course angle of the obstacle is obtained based on a movement direction of the obstacle. The obstacle risk of the first path point is determined based on the course angle of the obstacle, the horizontal obstacle risk relationship of the first path point, and the vertical obstacle risk relationship of the first path point. Optionally, the obstacle risk of the first path point is negatively correlated to a first angle. The first angle is a difference between the course angle of the obstacle and an angle between a horizontal axis of an earthfixed axis system and a ray that passes through the first path point by using the obstacle as an endpoint.

According to the path selection method provided in this embodiment of this application, when the obstacle risk relationship is constructed, a current course angle of the obstacle- can also be considered. Because the obstacle is usually a moving object, for example, a driving vehicle, the obstacle risk relationship that is obtained by considering a dynamic risk of the obstacle with reference to a moving direction of the obstacle can be adaptively adjusted along with a posture of the obstacle. Therefore, the generated obstacle risk relationship can be closer to a risk magnitude in an actual scenario, and an obstacle risk prediction effect is better.

In a possible implementation of the first aspect, the obstacle is a driving vehicle in the target road area.

In a possible implementation of the first aspect, the target object is a vehicle in the target road area, and the obstacle is a vehicle other than the target object in the target road area.

In a possible implementation of the first aspect, the method further includes: determining a road risk relationship of the target road area based on the basic road information, where the road risk relationship is used to obtain a road risk of any location in the target road area, and the basic road information includes a road length, a road width, and a location of the road reference line; and determining a comprehensive road risk of each of the plurality of candidate paths based on the road risk relationship and location distribution of each of the plurality of candidate paths in the target road area, where the comprehensive road risk is used to determine a target obstacle avoidance path from the candidate paths.

According to the path selection method provided in this embodiment of this application, a road boundary risk is further considered, and a driving risk is jointly determined based on the obstacle risk and the road risk, and is used to select the target path, so that a risk can be more comprehensively predicted.

In a possible implementation of the first aspect, the determining a comprehensive road risk of each of the plurality of candidate paths based on the road risk relationship and location distribution of each of the plurality of candidate paths in the target road area includes: determining the plurality of path points on the first candidate path in the plurality of candidate paths; determining road risks of the plurality of path points based on the road risk relationship; and determining a comprehensive road risk of the first candidate path based on the road risks of the plurality of path points. Optionally, a road risk of a third location is positively correlated to a difference between distances between the third location and left and right road boundaries.

According to the path selection method provided in this embodiment of this application, a comprehensive road risk of each candidate path is determined based on a plurality of path points sampled on the candidate paths, and a road closer to the road boundary indicates a higher risk of the road.

In a possible implementation of the first aspect, the method further includes: The determining a target path from the plurality of candidate paths based on the comprehensive obstacle risk of each candidate path includes: determining the target path from the plurality of candidate paths based on a path parameter and the comprehensive obstacle risk of each candidate path.

According to the path selection method provided in this embodiment of this application, in addition to the driving risk, the path parameter is further comprehensively considered, and the path parameter can be used to determine path quality, to determine a target obstacle avoidance path.

In a possible implementation of the first aspect, the path parameter includes at least one of the following: a curvature, a length, path consistency, a curvature change rate, a course angle error, and a course angle error change rate. The path consistency is used to indicate a degree of consistency between a candidate path at a current moment and a candidate path at a previous planning moment. The course angle error is used to indicate a deviation between a course angle at which a target drives along a candidate path and a course angle at which the target drives along the road reference line.

According to the path selection method provided in this embodiment of this application, different combinations of path parameters may be designed in a targeted manner to determine the target path, and the different combinations of path parameters can be used to determine path quality, to meet diversified requirements for path quality in actual application.

According to a second aspect, an embodiment of this application provides a path selection apparatus, including: an obtaining module, configured to obtain basic road information of a target road area, location information of an obstacle in the target road area, and a plurality of candidate paths for a target object in the target road area; and a determining module, configured to determine an obstacle risk relationship of the target road area based on the basic road information and the location information of the obstacle, where the obstacle risk relationship is used to obtain an obstacle risk of any location in the target road area. The determining module is further configured to determine a comprehensive obstacle risk of each candidate path based on the obstacle risk relationship and location distribution of each of the plurality of candidate paths in the target road area. The determining module is further configured to determine a target path from the plurality of candidate paths based on the comprehensive obstacle risk of each candidate path.

In a possible implementation of the second aspect, the plurality of candidate paths include a first candidate path. The determining module is specifically configured to: determine a plurality of path points on the first candidate path, determine obstacle risks of the plurality of path points based on the obstacle risk relationship, and determine a comprehensive obstacle risk of the first candidate path based on the obstacle risks of the plurality of path points.

In a possible implementation of the second aspect, the plurality of path points include a first path point. An obstacle risk of the first path point is determined based on a horizontal obstacle risk relationship of the first path point and a vertical obstacle risk relationship of the first path point. The horizontal obstacle risk relationship of the first path point is determined based on the location information of the obstacle and a horizontal obstacle risk amplification coefficient. The vertical obstacle risk relationship of the first path point is determined based on the location information of the obstacle and a vertical obstacle risk amplification coefficient.

Optionally, a horizontal obstacle risk of the first path point is positively correlated to the horizontal obstacle risk amplification coefficient, and is negatively correlated to a distance between the first path point and the obstacle in a horizontal road direction perpendicular to a road reference line. A vertical obstacle risk of the first path point is positively correlated to the vertical obstacle risk amplification coefficient, and is negatively correlated to a distance between the first path point and the obstacle in a vertical road direction along the road reference line. The horizontal obstacle risk amplification coefficient is less than the vertical obstacle risk amplification coefficient.

In a possible implementation of the second aspect, the obtaining module is further configured to obtain a course angle of the obstacle. The course angle of the obstacle is obtained based on a movement direction of the obstacle. The obstacle risk of the first path point is determined based on the course angle of the obstacle, the horizontal obstacle risk relationship of the first path point, and the vertical obstacle risk relationship of the first path point.

The obstacle risk of the first path point is negatively correlated to a first angle. The first angle is a difference between the course angle of the obstacle and an angle between a horizontal axis of an earthfixed axis system and a ray that passes through the first path point by using the obstacle as an endpoint.

In a possible implementation of the second aspect, the obstacle is a driving vehicle in the target road area.

In a possible implementation of the second aspect, the target object is a vehicle in the target road area, and the obstacle is a vehicle other than the target object in the target road area.

In a possible implementation of the second aspect, the determining module is further configured to: determine a road risk relationship of the target road area based on the basic road information, where the road risk relationship is used to obtain a road risk of any location in the target road area, and the basic road information includes a road length, a road width, and a location of the road reference line; and determine a comprehensive road risk of each of the plurality of candidate paths based on the road risk relationship and location distribution of each of the plurality of candidate paths in the target road area, where the comprehensive road risk is used to determine a target obstacle avoidance path from the candidate paths.

In a possible implementation of the second aspect, the determining module is specifically configured to: determine the plurality of path points on the first candidate path in the plurality of candidate paths, determine road risks of the plurality of path points based on the road risk relationship, and determine a comprehensive road risk of the first candidate path based on the road risks of the plurality of path points.

Optionally, a road risk of a third path point in the plurality of path points is positively correlated to a difference between distances between the third path point and left and right road boundaries.

In a possible implementation of the second aspect, the determining module is specifically configured to determine the target path from the plurality of candidate paths based on a path parameter and the comprehensive obstacle risk of each candidate path.

In a possible implementation of the second aspect, the path parameter includes at least one of the following: a curvature, a length, path consistency, a curvature change rate, a course angle error, and a course angle error change rate. The path consistency is used to indicate a degree of consistency between a candidate path at a current moment and a candidate path at a previous planning moment. The course angle error is used to indicate a deviation between a course angle at which a target object drives along a candidate path and a course angle at which the target object drives along the road reference line.

According to a third aspect, an embodiment of this application provides a path selection apparatus, including a processor and a memory, where the processor and the memory are connected to each other, the memory is configured to store a computer program, the computer program includes program instructions, and the processor is configured to invoke the program instructions to perform the method according to any one of the first aspect and the possible implementations.

According to a fourth aspect, an embodiment of this application provides a computer program product including instructions. When the computer program product is run on a computer, the computer is enabled to perform the method according to any one of the first aspect and the possible implementations.

According to a fifth aspect, an embodiment of this application provides a computer-readable storage medium including instructions. When the instructions are run on a computer, the computer is enabled to perform the method according to any one of the first aspect and the possible implementations.

According to a sixth aspect, an embodiment of this application provides a chip, including a processor. The processor is configured to read and execute a computer program stored in a memory, to perform the method in any possible implementation of any one of the foregoing aspects. Optionally, the chip includes the memory, and the memory and the processor are connected by using a circuit or a wire. Optionally, the chip further includes a communication interface, and the processor is connected to the communication interface. The communication interface is configured to receive data and/or information that needs to be processed. The processor obtains the data and/or information from the communication interface, processes the data and/or information, and outputs a processing result through the communication interface. The communication interface may be an input/output interface.

It can be learned from the foregoing technical solutions that embodiments of this application have the following advantages.

According to the path selection method provided in embodiments of this application, the obstacle risk relationship is constructed by using an artificial potential field method, to obtain an obstacle risk of any location on a road. Obstacle risks of the plurality of candidate paths can be determined based on the obstacle risk relationship and location distribution of the plurality of candidate paths in the target road area, and an optimal target path is determined through comparison of the obstacle risks of the plurality of candidate paths. When there is a large amount of obstacle data in the target road area, compared with the existing collision detection method, the path selection method in this application can significantly reduce path selection time.

In addition, according to the path selection method provided in embodiments of this application, the road risk relationship can be further constructed based on the basic road information, and a driving risk relationship is jointly determined based on the obstacle risk relationship and the road risk relationship. A risk potential value reflects a driving risk of a candidate path. Then, an optimal obstacle avoidance path is selected by calculating comprehensive evaluation values of the "path parameter" and a "driving risk" of the candidate path. Different from "collision detection" in which an inequality is used to check the candidate paths one by one, to determine whether the candidate path has an obstacle, the method provided in the solutions of this application is simpler and more efficient.

In addition, this solution can be used to select an optimal path from the candidate paths when path planning and obstacle avoidance are performed on a structured road of any shape.

## BRIEF DESCRIPTION OF DRAWINGS

FIG. 1 is a schematic diagram of path selection;
FIG. 2 is a schematic diagram of an architecture of a system for selecting an optimal obstacle avoidance path according to an embodiment of this application;
FIG. 3 is a schematic diagram of an embodiment of a path selection method according to an embodiment of this application;
FIG. 4 is a schematic diagram of an obstacle driving risk field according to an embodiment of this application;

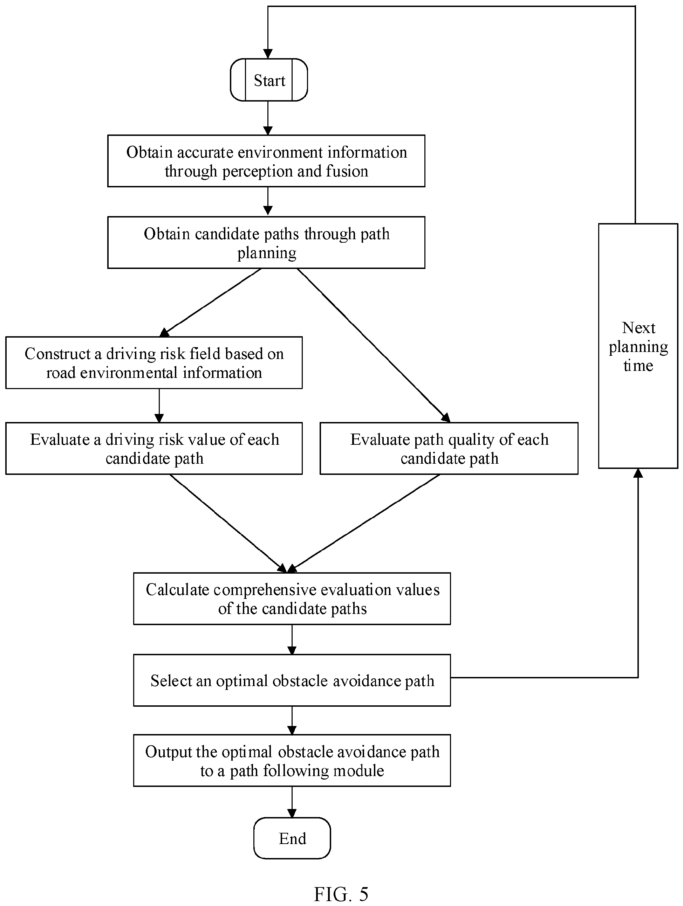

FIG. 5 is a schematic diagram of an embodiment of a path selection method according to an embodiment of this application;

FIG. 6a is a contour diagram of a driving risk field according to an embodiment of this application;

FIG. 6b is a driving risk contour diagram of an artificial potential field according to an embodiment of this application;

FIG. 7a is a schematic diagram of determining a target obstacle avoidance path from a plurality of candidate paths according to an embodiment of this application;

FIG. 7b is a schematic diagram of comprehensive path evaluation values of a plurality of candidate paths;

FIG. 8 is a schematic diagram of a comparison between a path selection method and a collision detection method according to an embodiment of this application;

FIG. 9 is a schematic diagram of an embodiment of a path selection apparatus according to an embodiment of this application; and

FIG. 10 is a schematic diagram of an embodiment of a path selection apparatus according to an embodiment of this application.

## DESCRIPTION OF EMBODIMENTS

Embodiments of this application provide a path selection method, applied to path selection during intelligent driving, to avoid checking candidate paths one by one. This reduces a calculation amount during path selection and improves path decision efficiency.

Embodiments of this application may be applied to motion of various moving targets (including motor vehicles, non-motor vehicles, pedestrians, robots, or the like) on various forms of paths (including highways, urban roads, rural roads, indoor paths, or the like). In subsequent embodiments, a vehicle or a lane is used as an example for description, but a person skilled in the art may extend a path planning field of the vehicle or the lane to a path planning field of another target. This is not specifically limited herein.

In embodiments of this application, it is assumed that an unmanned vehicle drives on a structured road. An actual application scenario may include a multi-lane scenario. In the multi-lane scenario, no matter which lane the unmanned vehicle is located on, the unmanned vehicle can only change to an adjacent lane in a driving process according to a traffic rule, that is, the unmanned vehicle can only change to a left lane or a right lane. Therefore, a multi-lane on which the unmanned vehicle drives can be simplified into a dual-lane model. In this embodiment of this application, the dual-lane model is used as an example for description. It may be understood that this does not constitute a limitation on a scenario in which the solution is implemented.

If a perception module is compared to human eyes and ears in an automated driving system, a decision-making and planning module is a brain during autonomous driving. After receiving various perception information from sensors, the brain analyzes a current environment and delivers instructions to a bottom-layer control module. This process is a main task of the decision-making and planning module.

A typical decision-making and planning module of the unmanned vehicle may be divided into three layers:

1. global path planning: after receiving a given driving destination, generating a global path with reference to map information, where the global path serves as a reference for subsequent specific path planning;

2. a behavior decision-making layer: after receiving the global path, making a specific behavior decision (for example, selecting to change a lane for overtaking or follow a vehicle) with reference to environment information (including another vehicle, a pedestrian, an obstacle, and traffic rule information on a road) obtained from the perception module; and

3. a final path planning layer: planning and generating a trajectory satisfying a specified constraint condition (for example, dynamic constraint of a vehicle or collision avoidance) based on the specific behavior decision, where the trajectory serves as an input to the control module, to determine a final driving path of the vehicle. Currently, an idea of a commonly used path planning method is as follows: A plurality of candidate paths are generated on a road surface by using a planning algorithm, and then an optimal obstacle avoidance path is selected based on geometric properties of the candidate paths and a location of an obstacle.

For ease of understanding, the following briefly describes some technical terms in this application.

A time headway (time headway, TH) is an important indicator for evaluating driving safety. The time headway represents a difference between a time point at which a front end of a front vehicle passes through a location and a time point at which a front end of a rear vehicle passes through the location, and can usually be calculated by dividing a space headway of the front vehicle and the rear vehicle by a velocity of the rear vehicle. The time headway indicates maximum reaction duration for a driver of the rear vehicle when the front vehicle brakes. Therefore, the time headway does not fluctuate with the change of the velocity and is usually represented by ht (unit: s).

The following describes embodiments of this application with reference to the accompanying drawings. It is clear that the described embodiments are merely a part rather than all of embodiments of this application. A person of ordinary skill in the art may learn that, with development of technologies and emergence of new scenarios, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the data termed in such a way are interchangeable in appropriate circumstances, so that the embodiments described herein can be implemented in other orders than the order illustrated or described herein. In addition, the terms "include", "have", and any variations thereof are intended to cover non-exclusive inclusions, for example, a process, method, system, product, or device including a series of steps or modules need not be limited to those clearly listed steps or modules, but may include other steps or modules that are not clearly listed or are inherent to these processes, methods, products, or devices. Naming or numbering of steps in this application does not mean that the steps in the method procedures need to be performed in a time/logical order indicated by the naming or numbering. An execution order of the steps in the procedures that have been named or numbered can be changed based on a technical objective to be achieved, as long as same or similar technical effects can be achieved.

The following describes the path selection method provided in the embodiments of this application.

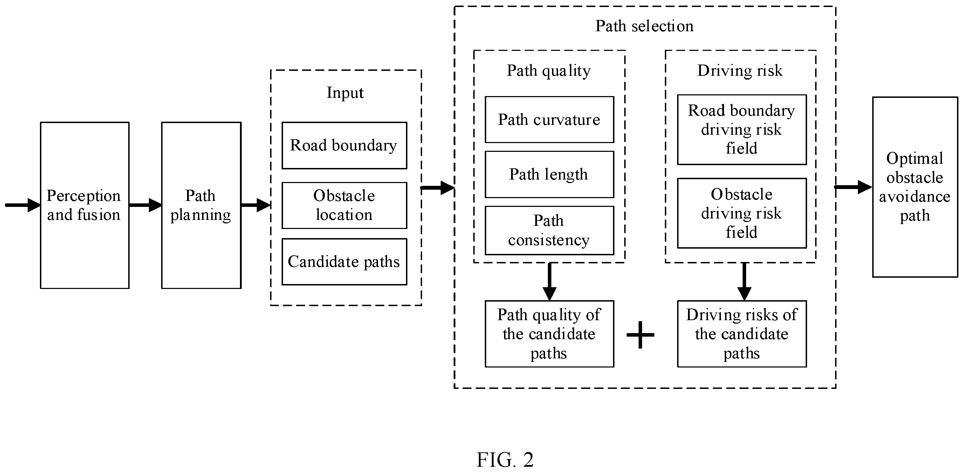

FIG. 2 is a schematic diagram of an architecture of a system for selecting an optimal obstacle avoidance path according to an embodiment of this application.

A vehicle obtains road boundary and obstacle location information through environment perception and information fusion, and obtains a cluster of candidate paths through a path planning module. The system uses a road boundary, an obstacle location, and the candidate paths as an input. The system for selecting a path comprehensively evaluates quality (determined by using a path parameter, for example, a path curvature, a length, and path consistency) and a driving risk (including a driving risk caused by the road boundary and an obstacle) that are of each candidate path, to select an optimal obstacle avoidance path as an output.

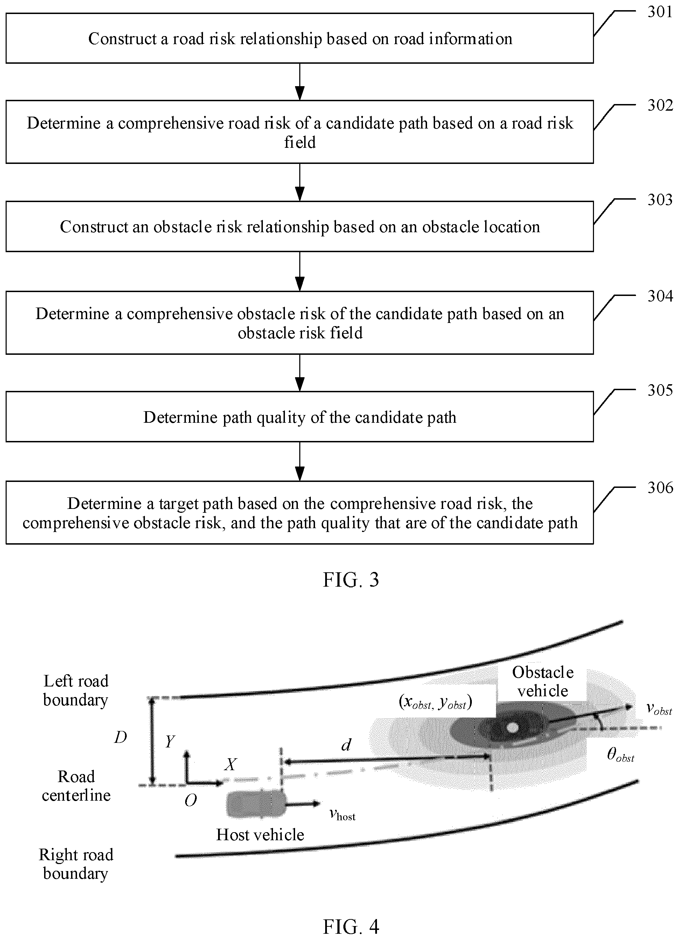

FIG. 3 is a schematic diagram of an embodiment of a path selection method according to an embodiment of this application.

301: Construct a road risk relationship based on basic road information.

A path selection apparatus constructs the road risk relationship based on basic road information of a target road area. The basic road information includes road locations that include a road start location, a road end location, a road boundary location, and a location of a road reference line. The road reference line may be, for example, a road centerline. The road start location and the road end location may be preset. Therefore, the target road area is determined based on the basic road information. The road risk relationship can be constructed based on different coordinate systems. An origin of coordinates may be a current target location, a start location of a centerline of a target road, or the like. This is not specifically limited herein. The following uses a Cartesian coordinate system as an example for description.

The road risk relationship is constructed and determined based on a parameter, namely, a horizontal distance between any point (x, y) on a road in the Cartesian coordinate system and a road boundary. In this embodiment of this application, the road risk relationship of the target road area is also referred to as a road risk field.

A calculation method of the road risk field is as follows:

$$U_{rd}(x,y) = k_l e^{-(Y_{bl}(s)-y)^2} + k_r e^{-(y-Y_{br}(s))^2} \tag{1}$$

In the formula, $k_l$, $k_r$ indicate respectively a strength value of a left road boundary risk field and a strength value of a right road boundary risk field, and represent risk evaluation values of road boundaries. A large value indicates a high risk near the road boundary. The value can be determined through simulation experience debugging. A specific value is not limited herein. $Y_{bi}(s)$, $i \in \{l, r\}$ respectively indicate a left road boundary value and a right road boundary value, and

$$Y_{bi}(s) = f_{cy}(s) \pm \frac{D/2}{\sqrt{f_{cx}'^2(s) + f_{cy}'^2(s)}}, i \in \{l, r\} \tag{2}$$

In the formula, $D$ indicates a road width, and $f_{cx}$ and $f_{cy}$ are functions of Cartesian coordinates of a road centerline about a corresponding centerline line length s. This means that a risk value corresponding to a location increases as a location is closer to left or right road boundary. In this way, a host vehicle is restricted to drive within a road range. A value of the subscript i may be 1 (left, left) or r (right, right), where 1 indicates a left boundary $Y_{bl}$ and r indicates a right boundary $Y_{br}$.

302: Determine a comprehensive road risk of a candidate path based on the road risk field.

A comprehensive road risk of each candidate path can be calculated based on the road risk field obtained in step 301. Optionally, path points on the candidate path are sampled at a specific interval, and a comprehensive road risk value of the entire candidate path is determined based on a road risk value at each path point.

Similarly, a comprehensive road risk value of each candidate path is determined.

Optionally, a plurality of candidate paths in the target road area are determined based on a location of a target object in the target road area. For example, the target object is used as a start point. Alternatively, the plurality of candidate paths are set based on a preset start location and a preset destination location. A manner of obtaining the candidate paths is not specifically limited herein.

It should be noted that step 301 and step 302 are optional steps, that is, step 301 and step 302 may be performed, or step 301 and step 302 may not be performed. This is not specifically limited herein.

303: Construct an obstacle risk relationship based on an obstacle location.

In this embodiment of this application, the obstacle risk relationship of the target road area is also referred to as an obstacle risk field. FIG. 4 is a schematic diagram of an obstacle driving risk field in this embodiment of this application.

The obstacle risk field on a road is determined based on the obstacle location. It may be understood that if the target road area includes a target vehicle, an obstacle is another vehicle other than the target vehicle; or if the target road area does not include a target vehicle, an obstacle includes all vehicles in the target road area.

Specifically, the obstacle driving risk field is also constructed based on a Gaussian function form. A general form of the obstacle driving risk field is:

$$U_{obst}(x,y) = \sum_{i=1}^{i=N} K_{obst,i} e^{-E_i} \qquad (3)$$

In the formula, N indicates a quantity of obstacles. The quantity of obstacles is not limited in this application.

$K_{obst}$ indicates a strength factor of the obstacle driving risk field, and should be designed based on statuses of the host vehicle and the obstacle. Optionally, in this embodiment of this application, $K_{obst}$ is represented as a non-linear function of a time headway $T_{h,i}$ between the host vehicle and an obstacle i.

$$K_{obst,i} = k_{obst} e^{-\mu T_h}, T_{h,i} = d_i / v_{host} \qquad (4)$$

In the foregoing formula, $k_{obst}$ indicates a reference strength reference value, a coefficient representing a risk strength of the obstacle, and may be determined by experience. A specific value is not limited herein. $\mu$ indicates an adjustment parameter of an exponent part, $d_i$ indicates a spacing between the host vehicle and an $i^{th}$ obstacle, and $v_{host}$ indicates a forward velocity of the host vehicle. This means that as a time headway increases, a strength factor of the obstacle risk field decreases, and in this case, a driving risk decreases.

A specific expression of $E_i$ is:

$$E_i = \frac{\left((x - x_{obst,i}) \cos \theta_{obst,i} + (y - y_{obst,i}) \sin \theta_{obst,i}\right)^2}{A}$$

$$+ \frac{\left((x - x_{obst,i}) \sin \theta_{obst,i} - (y - y_{obst,i}) \cos \theta_{obst,i}\right)^2}{B} \qquad (5)$$

In the expression, A indicates a vertical driving risk field amplification coefficient of the obstacle, and B indicates a horizontal driving risk field amplification coefficient of the obstacle. The coefficients may be considered as squares of "distances" obtained by amplifying and reducing vertical and horizontal distances between a location and an obstacle center ($x_{obst,i}$, $y_{obst,i}$) in an obstacle coordinate system. A driving risk value of the obstacle in a vertical or horizontal direction of the obstacle is amplified or reduced by adjusting the vertical driving risk field amplification coefficient A of the obstacle or the horizontal driving risk field amplification coefficient B of the obstacle (it should be noted that a value of A is usually greater than a value of B, for example, A is 250 to 1000, and B is 1, 2, or the like, specific values of A and B may be set by experience, and the specific values are not limited herein), for example, an impact range of the obstacle driving risk field in a vertical direction may be expanded by amplifying the coefficient A (keeping B unchanged), so that the host vehicle maintains an enough safe vertical relative distance from the obstacle. In addition, $E_i$ is related to a current course angle $\theta_{obst,i}$ of the $i^{th}$ obstacle. Therefore, distribution of obstacle risk field values can also be adaptively adjusted according to a posture of the obstacle. A vehicle course angle can be obtained by using a sensor such as a gyroscope. A specific obtaining manner is not limited herein.

An objective of an obstacle driving danger field is to prevent the host vehicle from colliding with another obstacle vehicle, so that the host vehicle keeps a safe distance from the obstacle vehicle. Therefore, when an obstacle driving risk field function is selected, a corresponding risk value tends to be infinite as the vehicle is approaching the obstacle vehicle. In addition, a risk field needs to be designed on the premise that risk values of the host vehicle and the obstacle in the vertical direction are greater than that in the horizontal direction at a same distance.

304: Determine a comprehensive obstacle risk of the candidate path based on the obstacle risk field.

The comprehensive obstacle risk of the candidate path can be calculated based on the obstacle risk field obtained in step 303. Optionally, path points are sampled on the candidate path at a specific interval, and a comprehensive obstacle risk value of the entire candidate path is determined based on an obstacle risk value at each path point.

Similarly, the comprehensive obstacle risk value of each candidate path is determined.

305: Determine a path parameter of the candidate path.

For each candidate path, a specific quantity of path reference points is selected. The quantity of path reference points is not limited herein. In this embodiment, an example in which N path reference points are selected is used for description. Quality of each candidate path is evaluated based on one or more path parameters. The path parameter includes at least one of the following: a curvature, a length, path consistency, a curvature change rate, a course angle error, a course angle error change rate, and the like. The path consistency is used to indicate a degree of consistency between a candidate path at a current moment and a candidate path determined at a previous planning moment. The course angle error is used to indicate a deviation between a course angle at which a target object drives along a candidate path and a course angle at which the target object drives along the road reference line. Specifically, the course angle error is a deviation between a course angle at a path point on the candidate path when the target object drives along the candidate path and a course angle at a point closest to the path point when the target object drives along the road reference line.

Optionally, one or more of the curvature, the length, the path consistency, the curvature change rate, the course angle error, and the course angle error change rate can be determined in this step. This is not specifically limited herein. It may be understood that a small path curvature indicates a low bending degree and high path quality; a small path length indicates high path quality; high path consistency indicates a small difference from a path planned at a previous moment, good path planning stability, and high path quality; a small path curvature change rate indicates high path quality; a small path course angle error indicates a path trend close to the road reference line and high path quality; and a small course angle error change rate indicates high path quality.

In this embodiment, an example in which the path parameter includes the curvature, the length, and the consistency is used for description.

Optionally, the curvature is measured by using an average curvature $Q_\kappa$ of paths, and the average curvature $Q_\kappa$ indicates an absolute value of an average curvature at path reference points.

$$Q_s = \frac{1}{N}\sum_{k=1}^{N} |\kappa_k| \qquad (6)$$

In the formula, $\kappa_k$ indicates a path curvature at the path reference points.

Optionally, the length is measured by using an average length $Q_s$ of paths, and the average length $Q_s$ indicates an average spacing length of the path reference points.

$$Q_s$$

$$= \frac{1}{N}\sum_{k=1}^{N} \Delta d_k \qquad (7)$$

In the formula, $\Delta d_k$ indicates an interval between adjacent sampling points.

Optionally, the path consistency is measured by using an average horizontal deviation square $Q_l$ of a path sampling point and a path planned at a previous moment.

$$Q_l = \frac{1}{N}\sum_{k=1}^{N} (L_k - L_{pre})^2 \qquad (8)$$

In the formula, $L_k$ indicates a horizontal displacement of a sampling point from the road centerline, and $L_{pre}$ indicates a horizontal displacement of an end point at a previous planning moment. The indicators ensure continuity of planning a path.

Therefore, an average value of a sum of the foregoing three path parameter indicators is used as an indicator Q for measuring path quality, namely:

$$Q = \bar{Q}_\kappa + \bar{Q}_s + \bar{Q}_l \tag{9}$$

In the formula, $\overline{Q}_\kappa$, $\overline{Q}_s$, $\overline{Q}_l$ indicate respectively normalized values of the indicators.

It should be noted that, because a path closer to the obstacle usually has a higher risk, a path with best quality is not necessarily the safest.

306: Determine a target path based on the comprehensive road risk, the comprehensive obstacle risk, and the path parameter that are of the candidate path.

A driving risk of each candidate path is determined based on a road risk and an obstacle risk, and is also referred to as a driving risk field in this embodiment.

A driving risk field $U$ includes a road boundary risk field $U_{rd}$ and an obstacle risk field $U_{obst}$. A size of the driving risk field is a sum of the road boundary risk field and the obstacle risk field.

$$U = U_{rd} + U_{obst} \tag{10}$$

It should be noted that if step 301 and step 302 are not performed, U = $U_{obst}$.

The target path is determined based on a trip risk and the path parameter. The path parameter may be one or more of the curvature, the length, the path consistency, the curvature change rate, the course angle error, and the course angle error change rate. If the target path is determined based on a plurality of path parameters, weights may be set for different path parameters. A quality indicator Q for measuring path quality is calculated based on the path parameter, so that a path is selected based on the quality indicator Q and the driving risk. In the following, an example in which the path parameter includes the curvature, the length, and the path consistency is used for description.

$\overline{U}$ is obtained after the driving risk fields $U$ of all the candidate paths are normalized. Then, based on the path quality indicator Q obtained in step 303, a product of a path quality indicator of each path and a driving risk indicator of each path is used as a final path selection indicator J. A path selection indicator of a candidate path k is $J_k$.

$$J_k = Q_k \cdot \overline{U}_k \tag{11}$$

It can be learned from (11) that the indicator J considers both the path quality and the driving risk. Therefore, a target path corresponding to a minimum value of J is an optimal obstacle avoidance path at a current planning moment.

For example, the following describes a specific embodiment of the path selection method in embodiments of this application.

It is assumed that the road centerline is a cubic polynomial curve, a road length is about L = 250 m, a curvature at a start of the centerline is 0, a curvature at an end is $C_f$ = 1/800, a road curvature change rate is C = $(C_f - C_0)/L$ = 1/200000, and a lateral displacement equation of the road centerline is set to:

$$y_r = \frac{1}{6} C x_r{}^3 = \frac{1}{1200000} x_r{}^3 \tag{12}$$

Cartesian horizontal X coordinates are sampled at a spacing of 1 on the centerline, namely, x = 0: 1: 250, there are a total of $n$ = 251 sampling points. A value y of a Cartesian vertical Y coordinate is calculated according to formula (12), a distance between adjacent sampling points is approximately calculated by the Pythagorean theorem, and a path vector s (an initial value s[0] = 0) is obtained through accumulation.

$$s[i] = s[i-1] + \text{sqrt}((x[i]-x[i-1])^2 + (y[i]-y[i-1])^2), i = 1, \ldots, n \qquad (13)$$

A function of the path vector s in Cartesian coordinates of the road centerline is constructed as follows. A Cartesian coordinate system is established at a start location of the road centerline. Optionally, by using a cubic spline curve interpolation method, a functional relation $f_{cx}$ between a Cartesian horizontal $X$ coordinate and the path vector s and a functional relation $f_{cy}$ between a Cartesian vertical $Y$ coordinate and the path vector s are obtained, as shown in formula (14).

$$\begin{cases} f_{cx} = SplineInterpolation(\boldsymbol{s}, \boldsymbol{x}) \\ f_{cy} = SplineInterpolation(\boldsymbol{s}, \boldsymbol{y}) \end{cases} \qquad (14)$$

A lane boundary risk field is constructed as follows. A unidirectional two-lane road is used as an example, and if a road width D is 7.5 m, a lane width is 3.75 m. Expressions $Y_{bl}, Y_{br}$ of left and right road boundary values are obtained according to formula (2) and formula (14), namely,

$$\begin{cases} Y_{bl}(s) = \dfrac{1}{1200000}x^3 + \dfrac{3.75}{\sqrt{f_{cx}'^2(s) + f_{cy}'^2(s)}} \\[4mm] Y_{br}(s) = \dfrac{1}{1200000}x^3 - \dfrac{3.75}{\sqrt{f_{cx}'^2(s) + f_{cy}'^2(s)}} \end{cases} \qquad (15)$$

If strength values of road boundary risk fields respectively are $k_l$ = 100, $k_r$ = 100, an expression of the road boundary risk field is as follows according to formula (1):

$$U_{rd} = 100e^{-(Y_{bl}(s)-y)^2} + 100e^{-(y-Y_{br}(s))^2} \qquad (16)$$

In the expression, s indicates any road centerline length.

The obstacle risk field is constructed as follows. It is assumed that there are two obstacles on the road. A static obstacle #1 is in the center of a left lane, and is about 50 m away from a start location. A location of the obstacle in the Cartesian coordinate system is $(x_{obst,1}, y_{obst,1})$ = (50,1.90). In this case, a course angle is $\theta_{obst,1}$ = 0. A moving obstacle #2 is on a right lane, and is 80 m away from the start location of the road. A location of the obstacle in the Cartesian coordinate system is $(x_{obst,2}, y_{obst,2})$ = (100,0.14). In this case, a course angle is $\theta_{obst,2}$ = 0.08 rad, a velocity is 15 m/s, and a moving direction is parallel to the centerline. A basic strength factor of the obstacle risk field is $k_{obst}$ = 100. It is assumed that the host vehicle is located at a center start location of the right lane, a velocity is 20 m/s, a time headway between the host vehicle and the static obstacle #1 is $T_{h1} = \dfrac{50}{20} = 2.5s$ , and a time headway between the host vehicle and the obstacle #2 is $T_{h2} = \dfrac{100}{20} = 5s$ . According to formula (4), if an adjustment parameter is $\mu$ = 10, a strength factor of a risk field of the static obstacle #1 is $K_{obst,1}$ = 100 × $e^{-2.5/10}$ = 77.88, and a strength factor of a risk field of the moving obstacle #2 is $K_{obst,2}$ = 100 × $e^{-5/10}$ = 60.65. The driving risk field amplification coefficients are A = 250, B = 1. In this case, according to formula (3), an expression of the obstacle risk field may be obtained.

$$U_{obst} = 77.88e^{-E_1} + 60.65e^{-E_2} \qquad (17)$$

In the expression,

$$E_1 = \frac{(x-50)^2}{250} + (y-1.90)^2$$

$$E_2 = \frac{\left((x-100)\cos 0.08 + (y-0.14)\sin 0.08\right)^2}{250} + \left((x-100)\sin 0.08 - (y-0.14)\cos 0.08\right)^2$$

With reference to the road boundary risk field and the obstacle risk field, an expression of a current obstacle driving risk field is finally obtained according to formula (10).

$$U = U_{rd} + U_{obst} = 10e^{-(Y_{bl}(s)-y)^2} + 10e^{-(y-Y_{br}(s))^2} + 77.88e^{-E_1} + 60.65e^{-E_2} \quad (18)$$

In this way, if any Cartesian coordinate location *(x, y)* is known, a size of a driving risk field of a current location can be calculated according to formula (18).

Currently, a virtual artificial potential field is constructed, so that an obstacle generates a " repulsion force" to a vehicle, and a target point generates an "attraction force" to the vehicle. In this way, the vehicle avoids the obstacle and moves toward the target point under the effect of the "repulsion force" and "attraction force". This method has the advantages of a simple principle and a small calculation amount, and is easy to implement. In the conventional technology, artificial potential field values cannot be effectively distinguished in a vertical direction and a horizontal direction of the obstacle. For example, if a host vehicle maintains a distance of 1 m from the obstacle in the vertical direction and a distance of 1 m in the horizontal direction, danger levels are different, and corresponding potential field values are also clearly different. In addition, an existing artificial potential field design usually cannot be properly adjusted with movement, a posture change, or the like of the obstacle. However, when a potential field method is simply used for planning a path, due to lack of global information, a local minimum value of the vehicle is prone to be obtained, and consequently, the planned path oscillates or even stops.

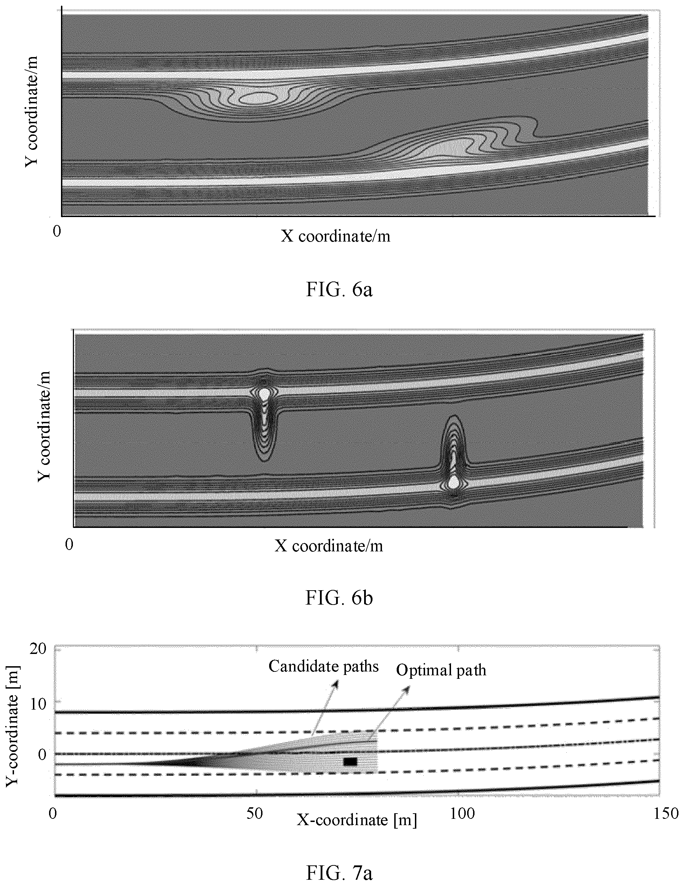

FIG. 6a and FIG. 6b are respectively a contour map of a driving risk field and a driving risk contour map of an artificial potential field according to this embodiment of this application, which can be obtained through programming in an MATLAB environment.

It can be learned from FIG. 6a that, in the solution provided in this application, a risk value of a current driving environment can be generated in real time, and a driving risk value increases significantly when a host vehicle is closer to a lane boundary or an obstacle.

FIG. 6b shows a driving risk contour map constructed by using a general artificial potential field. In other words, when a driving risk of the obstacle is constructed, danger levels of the obstacle in a horizontal direction and a vertical direction are not distinguished. In this way, there is a high potential field value for only a very short distance in the vertical direction, indicating that there is impact only when a host vehicle is very close to the obstacle; on the contrary, there is a high potential field value within a horizontal lane range, and a low potential value can be obtained only when the host vehicle is far away from the obstacle in the horizontal direction; and neither of the two cases is suitable for path decision-making.

In addition, FIG. 6b does not reflect a difference between risk levels of the obstacle in different states. A risk field value of the obstacle can be determined based on a current relative motion state of the host vehicle. Because a time headway between a static obstacle and the host vehicle is greater than a time headway between a distant moving obstacle and the host vehicle, a driving risk value of the static obstacle is greater than that of the distant moving obstacle. In addition, it can be further learned that, compared with that in FIG. 6b, a driving risk value in FIG. 6a can be correspondingly adjusted based on a course of the vehicle.

FIG. 7a is a schematic diagram of determining a target obstacle avoidance path from a plurality of candidate paths according to an embodiment of this application.

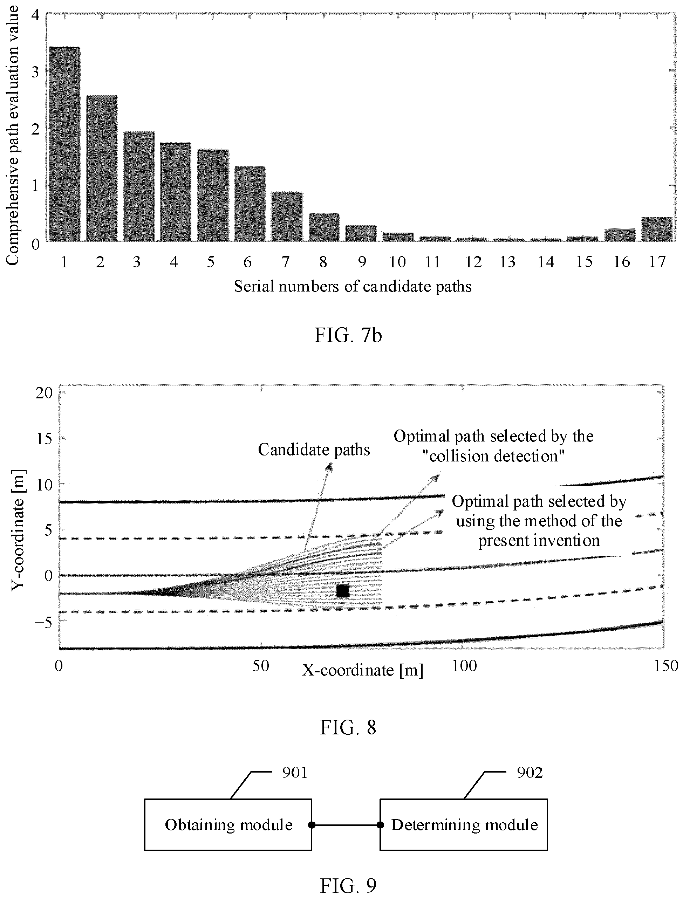

A plurality of candidate paths can be generated by using a cubic polynomial method. Path sampling points are generated at a spacing of 1, namely, $S_p$ = 0: 1: 70. Indicators including an average curvature, an average length, and path consistency of each path are calculated according to formula (6) to formula (8). After the three indicators are normalized, a path quality indicator is calculated according to formula (9). Driving risk values are calculated according to formula (1) to formula (5) and formula (10), and then are normalized. Normalized values are shown in Table 1. Finally, final evaluation values of the path are calculated according to formula (11), and a path with a sequence number corresponding to a minimum value in the final evaluation values is an optimal obstacle avoidance path. FIG. 7b is a schematic diagram of comprehensive path evaluation values of a plurality of candidate paths.

**Table 1 Candidate path evaluation indicators**

| No. | Average curvature [rad/m] | Average length [m] | Consistency [m] | Path quality [-] | Driving risk [-] | Comprehensive evaluation [-] |
|---|---|---|---|---|---|---|
| 1 | 0.3301 | 0.9965 | 1.0000 | 0.7755 | 1.0000 | 0.7755 |
| 2 | 0.2473 | 0.9963 | 0.9304 | 0.7247 | 0.8460 | 0.6131 |
| 3 | 0.1651 | 0.9962 | 0.8607 | 0.6740 | 0.7447 | 0.5020 |
| 4 | 0.0853 | 0.9961 | 0.7911 | 0.6242 | 0.7809 | 0.4874 |
| 5 | 0.0395 | 0.9961 | 0.7215 | 0.5857 | 0.8210 | 0.4809 |
| 6 | 0.0945 | 0.9961 | 0.6518 | 0.5808 | 0.7242 | 0.4206 |
| 7 | 0.1756 | 0.9962 | 0.5823 | 0.5847 | 0.5212 | 0.3047 |
| 8 | 0.2581 | 0.9963 | 0.5127 | 0.5890 | 0.3253 | 0.1916 |
| 9 | 0.3411 | 0.9965 | 0.4430 | 0.5936 | 0.1934 | 0.1148 |
| 10 | 0.4240 | 0.9968 | 0.3735 | 0.5981 | 0.1179 | 0.0705 |
| 11 | 0.5068 | 0.9971 | 0.3039 | 0.6026 | 0.0762 | 0.0459 |
| 12 | 0.5896 | 0.9974 | 0.2343 | 0.6071 | 0.0529 | 0.0321 |
| **13** | 0.6722 | 0.9978 | 0.1648 | 0.6116 | 0.0423 | **0.0259** |
| 14 | 0.7546 | 0.9983 | 0.0953 | 0.6161 | 0.0538 | 0.0332 |
| 15 | 0.8367 | 0.9988 | 0.0259 | 0.6205 | 0.1179 | 0.0732 |
| 16 | 0.9185 | 0.9994 | 0.0436 | 0.6538 | 0.2540 | 0.1660 |
| 17 | 1 | 1.0000 | 0.1130 | 0.7043 | 0.4040 | 0.2846 |

A specific implementation effect of the candidate paths is shown in FIG. 7a. At the beginning of planning, a distance between the obstacle and the host vehicle is about 70 m, and a normal displacement between the obstacle and the road centerline is -2 m. Generated curve clusters are candidate paths. A bold candidate path is a determined target obstacle avoidance path, namely, an optimal obstacle avoidance path. Evaluation values corresponding to the paths are shown in FIG. 7b. It can be learned that path 13 has a minimum comprehensive path evaluation value, and may be determined as the target obstacle avoidance path.

FIG. 8 is a schematic diagram of a comparison between a path selection method and a collision detection method according to an embodiment of this application.

To distinguish from a technical effect of the conventional technology, in this embodiment, the currently commonly used "collision detection" method in which inequality determining is used is selected for comparison. Based on simulation verification, average duration consumed by the path selection method in this application is about 25 ms, and duration consumed by the collision detection method is more than twice as much as the former, about 59 ms. In addition, optimal paths selected by using the two methods are different. As shown in FIG. 8, a path selected by using the collision detection method is closer to a road boundary than a path selected by using this method, and a location of the path selected by using this method in this application is closer to a road centerline and is ideal.

The foregoing describes the path selection method provided in this application, and the following describes a path selection apparatus for implementing the path selection method. FIG. 9 is a schematic diagram of an embodiment of a path selection apparatus in this embodiment of this application.

The path selecting apparatus includes:

an obtaining module 901, configured to obtain basic road information of a target road area, location information of an obstacle in the target road area, and a plurality of candidate paths for a target object in the target road area; and
a determining module 902, configured to determine an obstacle risk relationship of the target road area based on the road information and the location information of the obstacle, where the obstacle risk relationship is used to obtain an obstacle risk of any location in the target road area.

The determining module 902 is further configured to determine a comprehensive obstacle risk of each candidate path based on the obstacle risk relationship and location distribution of each of the plurality of candidate paths in the target road area.

The determining module 902 is further configured to determine a target path from the plurality of candidate paths based on the comprehensive obstacle risk of each candidate path.

Optionally, the plurality of candidate paths include a first candidate path. The determining module 902 is specifically configured to: determine a plurality of path points on the first candidate path, determine obstacle risks of the plurality of path points based on the obstacle risk relationship, and determine a comprehensive obstacle risk of the first candidate path based on the obstacle risks of the plurality of path points.

Optionally, the plurality of path points include a first path point. An obstacle risk of the first path point is determined based on a horizontal obstacle risk relationship of the first path point and a vertical obstacle risk relationship of the first path point. The horizontal obstacle risk relationship of the first path point is determined based on the location information of the obstacle and a horizontal obstacle risk amplification coefficient. The vertical obstacle risk relationship of the first path point is determined based on the location information of the obstacle and a vertical obstacle risk amplification coefficient.

Optionally, the obtaining module 901 is further configured to obtain a course angle of the obstacle. The course angle of the obstacle is obtained based on a movement direction of the obstacle. The obstacle risk of the first path point is determined based on the course angle of the obstacle, the horizontal obstacle risk relationship of the first path point, and the vertical obstacle risk relationship of the first path point.

Optionally, the obstacle is a driving vehicle in the target road area.

Optionally, the target object is a vehicle in the target road area, and the obstacle is a vehicle other than the target object in the target road area.

Optionally, the determining module 902 is further configured to: determine a road risk relationship of the target road area based on the road information, where the road risk relationship is used to obtain a road risk of any location in the target road area, and the road information includes a road length, a road width, and a location of a road reference line; and determine a comprehensive road risk of each of the plurality of candidate paths based on the road risk relationship and location distribution of each of the plurality of candidate paths in the target road area, where the comprehensive road risk is used to determine a target obstacle avoidance path from the candidate paths.

Optionally, the determining module 902 is specifically configured to: determine the plurality of path points on the first candidate path in the plurality of candidate paths, determine road risks of the plurality of path points based on the road risk relationship, and determine a comprehensive road risk of the first candidate path based on the road risks of the plurality of path points.

Optionally, the determining module 902 is further configured to determine path quality of each candidate path.

The determining module 902 is specifically configured to determine the target path from the plurality of candidate paths based on the path quality and the comprehensive obstacle risk of each candidate path.

Optionally, the path quality is obtained based on at least one of the following factors: a curvature, a length, path consistency, a curvature change rate, a course angle error, and a course angle error change rate. The path consistency is used to indicate a degree of consistency between a candidate path at a current moment and a candidate path at a previous planning moment.

Only one or more of the modules in FIG. 9 may be implemented by using software, hardware, firmware, or a combination thereof. The software or firmware includes but is not limited to computer program instructions or code, and may be executed by a hardware processor. The hardware includes but is not limited to various integrated circuits, for example, a central processing unit (CPU), a digital signal processor (DSP), a field programmable gate array (FPGA), or an application-specific integrated circuit (ASIC).

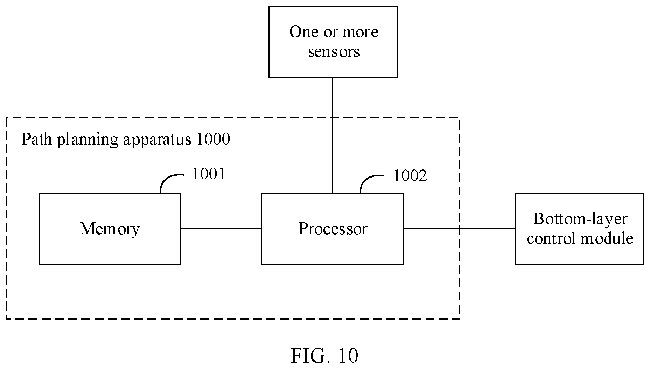

FIG. 10 is a schematic diagram of an embodiment of a path selection apparatus according to an embodiment of this application.

As shown in FIG. 10, a path selection apparatus 1000 includes a memory 1001 and a processor 1002. The memory 1001 stores computer program instructions, and the processor 1002 runs the computer program instructions to perform operations related to path selection described in the foregoing embodiments. The processor 1002 is further connected to one or more sensors outside the path selection apparatus 1000, and receives original data that is of an environment around a vehicle and that is detected by the sensor. The sensor includes but is not limited to a camera, a laser radar, an ultrasonic radar, or a millimeter wave radar. A target path output by the path selection apparatus 1000 is usually sent to a bottom-layer control module of an intelligent driving vehicle, to provide vehicle control reference information. The bottom-layer control module may also be a software module executed by the processor 1002 or integrated into the processor 1002, which is not limited in this embodiment. The processor 1002 includes but is not limited to various CPUs, a DSP, a microcontroller, a microprocessor, or an artificial intelligence processor.

The path selection apparatuses shown in FIG. 9 and FIG. 10 construct an obstacle risk field according to an artificial potential field method, further construct a road risk field based on road information, and jointly determine a driving risk field based on the obstacle risk field and the road risk field. A risk potential value reflects a driving risk of a candidate path. Then, an optimal obstacle avoidance path is selected by calculating comprehensive evaluation values of a "path quality indicator" and a "driving risk indicator" of the candidate path. Different from "collision detection" in which an inequality is used to check candidate paths one by one, to determine whether a candidate path has an obstacle, the method provided in the solutions of this application is simpler and more efficient. When there is a large amount of obstacle data in a target road area, compared with the existing collision detection method, the path selection method in this application can significantly reduce path selection time.

**Claims**

1. A path selection method, comprising:

   obtaining basic road information of a target road area, location information of an obstacle in the target road area, and a plurality of candidate paths for a target object in the target road area;
   determining an obstacle risk relationship of the target road area based on the basic road information and the location information of the obstacle, wherein the obstacle risk relationship is used to obtain an obstacle risk of any location in the target road area;
   determining a comprehensive obstacle risk of each candidate path based on the obstacle risk relationship and location distribution of each of the plurality of candidate paths in the target road area; and
   determining a target path from the plurality of candidate paths based on the comprehensive obstacle risk of each candidate path.

2. The method according to claim 1, wherein the plurality of candidate paths comprise a first candidate path; and the determining a comprehensive obstacle risk of each candidate path based on the obstacle risk relationship and location distribution of each of the plurality of candidate paths in the target road area comprises:

   determining a plurality of path points on the first candidate path;
   determining obstacle risks of the plurality of path points based on the obstacle risk relationship; and
   determining a comprehensive obstacle risk of the first candidate path based on the obstacle risks of the plurality of path points.

3. The method according to claim 2, wherein the plurality of path points comprise a first path point;

   an obstacle risk of the first path point is determined based on a horizontal obstacle risk relationship of the first path point and a vertical obstacle risk relationship of the first path point;
   the horizontal obstacle risk relationship of the first path point is determined based on the location information of the obstacle and a horizontal obstacle risk amplification coefficient; and
   the vertical obstacle risk relationship of the first path point is determined based on the location information of the obstacle and a vertical obstacle risk amplification coefficient.

4. The method according to claim 3, wherein the method further comprises:

   obtaining a course angle of the obstacle, wherein the course angle of the obstacle is obtained based on a movement direction of the obstacle; and
   the obstacle risk of the first path point is determined based on the course angle of the obstacle, the horizontal obstacle risk relationship of the first path point, and the vertical obstacle risk relationship of the first path point.

5. The method according to any one of claims 1 to 4, wherein the obstacle is a driving vehicle in the target road area.

6. The method according to any one of claims 1 to 5, wherein the method further comprises:

   determining a road risk relationship of the target road area based on the basic road information, wherein the road risk relationship is used to obtain a road risk of any location point in the target road area, and the basic road information comprises a road length, a road width, and a location of a road reference line; and
   determining a comprehensive road risk of each of the plurality of candidate paths based on the road risk relationship and location distribution of each of the plurality of candidate paths in the target road area, wherein the comprehensive road risk is used to determine a target obstacle avoidance path from the candidate paths.

7. The method according to claim 6, wherein

the determining a comprehensive road risk of each of the plurality of candidate paths based on the road risk relationship and location distribution of each of the plurality of candidate paths in the target road area comprises:

> determining the plurality of path points on the first candidate path in the plurality of candidate paths;
> determining road risks of the plurality of path points based on the road risk relationship; and
> determining a comprehensive road risk of the first candidate path based on the road risks of the plurality of path points.

8. The method according to any one of claims 1 to 7, wherein
the determining a target path from the plurality of candidate paths based on the comprehensive obstacle risk of each candidate path comprises:
determining the target path from the plurality of candidate paths based on a path parameter and the comprehensive obstacle risk of each candidate path.

9. The method according to claim 8, wherein
the path parameter comprises at least one of the following: a curvature, a length, path consistency, a curvature change rate, a course angle error, and a course angle error change rate, wherein the path consistency is used to indicate a degree of consistency between a candidate path at a current moment and a candidate path at a previous planning moment, and the course angle error is used to indicate a deviation between a course angle at which a target drives along a candidate path and a course angle at which the target drives along the road reference line.

10. A path selection apparatus, comprising:

> an obtaining module, configured to obtain basic road information of a target road area, location information of an obstacle in the target road area, and a plurality of candidate paths for a target object in the target road area; and
> a determining module, configured to determine an obstacle risk relationship of the target road area based on the basic road information and the location information of the obstacle, wherein the obstacle risk relationship is used to obtain an obstacle risk of any location in the target road area;
> the determining module is further configured to determine a comprehensive obstacle risk of each candidate path based on the obstacle risk relationship and location distribution of each of the plurality of candidate paths in the target road area; and
> the determining module is further configured to determine a target path from the plurality of candidate paths based on the comprehensive obstacle risk of each candidate path.

11. The apparatus according to claim 10, wherein the plurality of candidate paths comprise a first candidate path; and
the determining module is specifically configured to:

> determine a plurality of path points on the first candidate path;
> determine obstacle risks of the plurality of path points based on the obstacle risk relationship; and
> determine a comprehensive obstacle risk of the first candidate path based on the obstacle risks of the plurality of path points.

12. The apparatus according to claim 11, wherein the plurality of path points comprise a first path point;

> an obstacle risk of the first path point is determined based on a horizontal obstacle risk relationship of the first path point and a vertical obstacle risk relationship of the first path point;
> the horizontal obstacle risk relationship of the first path point is determined based on the location information of the obstacle and a horizontal obstacle risk amplification coefficient; and
> the vertical obstacle risk relationship of the first path point is determined based on the location information of the obstacle and a vertical obstacle risk amplification coefficient.

13. The apparatus according to claim 11 or 12, wherein

> the obtaining module is further configured to obtain a course angle of the obstacle, wherein the course angle of the obstacle is obtained based on a movement direction of the obstacle; and
> the obstacle risk of the first path point is determined based on the course angle of the obstacle, the horizontal obstacle risk relationship of the first path point, and the vertical obstacle risk relationship of the first path point.

**14.** The apparatus according to any one of claims 10 to 13, wherein the obstacle is a driving vehicle in the target road area.

**15.** The apparatus according to any one of claims 10 to 14, wherein the determining module is further configured to:

determine a road risk relationship of the target road area based on the basic road information, wherein the road risk relationship is used to obtain a road risk of any location in the target road area, and the basic road information comprises a road length, a road width, and a location of a road reference line; and
determine a comprehensive road risk of each of the plurality of candidate paths based on the road risk relationship and location distribution of each of the plurality of candidate paths in the target road area, wherein the comprehensive road risk is used to determine a target obstacle avoidance path from the candidate paths.

**16.** The apparatus according to claim 15, wherein the determining module is specifically configured to:

determine the plurality of path points on the first candidate path in the plurality of candidate paths;
determine road risks of the plurality of path points based on the road risk relationship; and
determine a comprehensive road risk of the first candidate path based on the road risks of the plurality of path points.

**17.** The apparatus according to any one of claims 10 to 16, wherein the determining module is specifically configured to: determine the target path from the plurality of candidate paths based on a path parameter and the comprehensive obstacle risk of each candidate path.

**18.** The apparatus according to claim 17, wherein
the path parameter comprises at least one of the following: a curvature, a length, path consistency, a curvature change rate, a course angle error, and a course angle error change rate, wherein the path consistency is used to indicate a degree of consistency between a candidate path at a current moment and a candidate path at a previous planning moment, and the course angle error is used to indicate a deviation between a course angle at which a target object drives along a candidate path and a course angle at which the target object drives along the road reference line.

**19.** A path selection apparatus, comprising a processor and a memory, wherein the processor and the memory are connected to each other, the memory is configured to store a computer program, the computer program comprises program instructions, and the processor is configured to invoke the program instructions to perform the method according to any one of claims 1 to 9.

**20.** A computer program product comprising instructions, wherein when the computer program product is run on a computer, the computer is enabled to perform the method according to any one of claims 1 to 9.

**21.** A computer-readable storage medium, comprising instructions, wherein when the instructions are run on a computer, the computer is enabled to perform the method according to any one of claims 1 to 9.

FIG. 1

FIG. 2

EP 4 089 369 A1

| | 301 |
|---|---|
| Construct a road risk relationship based on road information | |

| | 302 |
|---|---|
| Determine a comprehensive road risk of a candidate path based on a road risk field | |

| | 303 |
|---|---|
| Construct an obstacle risk relationship based on an obstacle location | |

| | 304 |
|---|---|
| Determine a comprehensive obstacle risk of the candidate path based on an obstacle risk field | |

| | 305 |
|---|---|
| Determine path quality of the candidate path | |

| | 306 |
|---|---|
| Determine a target path based on the comprehensive road risk, the comprehensive obstacle risk, and the path quality that are of the candidate path | |

FIG. 3

FIG. 4

Start

Obtain accurate environment information
through perception and fusion

Obtain candidate paths through path
planning

Construct a driving risk field based on
road environmental information

Evaluate a driving risk value of each
candidate path

Evaluate path quality of each
candidate path

Next
planning
time

Calculate comprehensive evaluation values
of the candidate paths

Select an optimal obstacle avoidance path

Output the optimal obstacle avoidance path
to a path following module

End

FIG. 5

FIG. 6a

FIG. 6b

FIG. 7a

FIG. 7b

FIG. 8

FIG. 9

FIG. 10

## INTERNATIONAL SEARCH REPORT

International application No.

**PCT/CN2020/072850**

### A. CLASSIFICATION OF SUBJECT MATTER

G01C 21/34(2006.01)i

According to International Patent Classification (IPC) or to both national classification and IPC

### B. FIELDS SEARCHED

Minimum documentation searched (classification system followed by classification symbols)

G01C

Documentation searched other than minimum documentation to the extent that such documents are included in the fields searched

Electronic data base consulted during the international search (name of data base and, where practicable, search terms used)

WPI, EPODOC, CNPAT, CNKI: 无人, 自动, 自主, 行驶, 辅助, 智能, 驾驶, 车辆, 危险, 风险, 安全, 路径, 选择, 规划, 道路, 车道, 边界, 位置, 距离, 避障, 障碍, automatic, unmanned, driving, driverless, vehicle, danger, risk, safety, path, route, road, lane, boundary, location, distance, obstacle avoidance

### C. DOCUMENTS CONSIDERED TO BE RELEVANT

| Category* | Citation of document, with indication, where appropriate, of the relevant passages | Relevant to claim No. |
|---|---|---|
| Y | CN 109855637 A (BAIC BJEV CO., LTD.) 07 June 2019 (2019-06-07) description, paragraphs [0058]-[0108] | 1-21 |
| Y | CN 104897168 A (TSINGHUA UNIVERSITY) 09 September 2015 (2015-09-09) description paragraphs [0027]- [0062]) | 1-21 |
| A | CN 107702716 A (GUANGZHOU XIAOPENG MOTORS TECHNOLOGY COMPANY LTD.) 16 February 2018 (2018-02-16) entire document | 1-21 |
| A | US 2017166204 A1 (HYUNDAI MOTOR COMPANY) 15 June 2017 (2017-06-15) entire document | 1-21 |
| A | 姜静 等 (JIANG, Jing et al.). "工业AGV叉车路径规划算法的改进研究 (Non-official translation: Improving Routing Algorithm for Industrial Forklift AGVs)" 电子世界 (Electronics World), No. 21, 15 November 2019 (2019-11-15), entire document | 1-21 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 September 2020** | **21 October 2020** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

| | | | | International application No. PCT/CN2020/072850 |
|---|---|---|---|---|

| Patent document cited in search report | | | Publication date (day/month/year) | Patent family member(s) | | | Publication date (day/month/year) |
|---|---|---|---|---|---|---|---|
| CN | 109855637 | A | 07 June 2019 | None | | | |
| CN | 104897168 | A | 09 September 2015 | None | | | |
| CN | 107702716 | A | 16 February 2018 | WO | 2019042295 | A1 | 07 March 2019 |
| | | | | US | 2020149906 | A1 | 14 May 2020 |
| US | 2017166204 | A1 | 15 June 2017 | KR | 101714273 | B1 | 08 March 2017 |
| | | | | CN | 107031619 | A | 11 August 2017 |

Form PCT/ISA/210 (patent family annex) (January 2015)